# EUROPEAN PATENT SPECIFICATION

(11) **EP 1 407 155 B1**
(45) Date of publication and mention of the grant of the patent: **19.10.2005**
(21) Application number: 02747455.0
(22) Date of filing: 02.07.2002
(51) Int. Cl.: F16C 29/02, F16C 25/02

(54) **LINEAR SLIDING GUIDE**
GLEITFÜHRUNGSLINEAREINHEIT
GUIDE COULISSANT LINEAIRE

(43) Date of publication of application: 14.04.2004
(73) Proprietor: W & L Vermögensverwaltung Gmbh & Co. Kg, 42655 Solingen (DE)
(72) Inventor: LIEDMANN, Peter, 42655 Solingen (DE); ZUNDEL, Wolfgang, 40699 Erkrath (DE); NIEDERPRÜM, Gerhard, 42651 Solingen (DE)
(74) Representative: Bobzien, Hans Christoph
(86) International application number: PCT/EP2002/007295
(87) International publication number: WO 2004/005734

(56) References cited:
- EP-A- 0 528 541
- EP-A- 0 682 188
- FR-A- 1 261 540
- GB-A- 795 601
- US-A- 5 143 454
- US-A- 5 273 367
- US-A- 5 735 610
- US-A- 6 036 366

## Description

The invention concerns a linear sliding guide comprising a shaped rail which extends in the longitudinal direction and which is of a given cross-section and which has sliding surfaces, and a slider which is axially displaceable on the sliding surfaces of the shaped rail and which has sliding bearings which bear against the sliding surfaces and the contact pressure of which against the sliding surfaces is adjustable by way of clamping means.

Examples of use of sliding guides of that kind are machine tools, handling apparatuses and automatic apparatuses in industrial manufacture, displacement units for abutment straightedges, welding reflectors and slider guides in the plastic industry and the woodworking industry, displaceable abutments in the case of metal plate processing machines, processing and filling installations in the chemical industry, the foodstuffs industry and the drinks industry, guides for clamping elements, locks and sluices in hydraulic power installations or the like. The invention can also be advantageously used in a dirty environment, in woodland husbandry and forestry, agriculture and the chemical industry.

In this respect either the slider can be moved by an element and then serves for example as a carrier for a tool or instrument, or conversely the shaped rail or guide can be moved along a plurality of fixedly mounted sliders. The drive can be electrical, pneumatic, hydraulic or mechanical.

In the preferred embodiment the shaped rail comprises aluminium.

A sliding guide of that kind is known from Austrian patent specification AT 408081. In that sliding guide the shaped rail is in the form of a T-shaped member which is embraced by a slider which is of C-shaped configuration as viewed in cross-section and which substantially corresponds to the external contour of the guide but which is of a somewhat larger cross-section. Provided in the slider, on the surface which faces towards the shaped rail, are recesses which are in the form of segments of a circle and which receive sliding bearings which are also in the shape of segments of a circle, extending in the ,longitudinal direction, relative to the shaped rail. The slider is nowhere in direct contact with the shaped rail but is only in contact therewith by way of the sliding bearings. The contact pressure of the sliding bearings against the sliding surfaces can be prestressed by way of clamping wedge members which can be inserted at the end between the slider and the sliding bearings.

Document US 5 273 367 (TANAKA KAZUHIKO) discloses as well a sliding guide with the features of the prambule of claim 1.

A disadvantage with the known sliding guides is the poor way in which torque is carried in the event of a force acting eccentrically on the slider. That results in upsetting of the sliding bearings in particular at the edge regions, because of the higher levels of torque involved. That can result in the slider being difficult to move or no longer moving at all. In addition the contact pressure of the sliding bearings against the sliding surfaces cannot be sufficiently finely adjusted and in particular cannot be adjusted to be free of play.

The technical object of the present invention is to develop a sliding guide of the general kind set forth in such a way that upsetting of the sliding bearings is substantially reduced or avoided and it is possible to implement fine adjustment of the contact pressure.

In accordance with the invention that is achieved in that the shaped rails have mutually oppositely disposed recesses extending in the longitudinal direction, that the sliding surfaces are provided within the recesses, that provided in corresponding relationship with each recess on the slider is a prestressing bar with a wedge-shaped operative surface which can be pressed into the respective recess and that the sliding bearings are respectively arranged on the operative surfaces.

The side surfaces of the shaped rail accordingly have groove-shaped recesses extending in the longitudinal direction. The recesses are provided with inner sliding surfaces which are inclined in opposite relationship to each other and which extend parallel to the longitudinal axis of the shaped or guide rail. The recess can be for example in the form of a wedge-shaped groove or a substantially trough-shaped groove with rounded corners.

The sliding surfaces which are preferably hardened by coating are arranged on the inside of the shaped rail in the recess. The sliding bearings are arranged on the wedge-shaped operative surfaces of the prestressing bars in such a way that in the position of installation they can be pressed into the recesses in the shaped rail and the bearings which are disposed in mutually opposite relationship on both sides afford an O-arrangement.

For the purposes of adjusting the contact pressure of the bearings against the shaped rail at least one prestressing bar is displaceable radially in relation to the slider. That can be effected for example by screws which act on the prestressing bar on the outside and which can be screwed into screwthreaded bores in the slider.

The arrangement of the sliding surfaces, which in the position of installation is inclined in relation to the horizontal axis, permits a better flux of force from the sliding bearings to the shaped rail, than in the known designs. At the same time the arrangement provides that torque is carried in a more advantageous manner by virtue of the larger spacing between the sliding surfaces in relation to the sliding surfaces known from the state of the art and which extend horizontally in relation to each other. The inclined arrangement of the sliding surfaces and the corresponding arrangement of the sliding bearings also permits finer adjustment of the contact pressure.

Particularly accurate and fine adjustment of the contact pressure can be effected if both prestressing bars are radially displaceable.

The preferred configuration of a substantially trough-shaped recess with lateral, concavely shaped sliding surfaces and correspondingly convexly shaped sliding bearings represents markedly larger force-engagement surfaces for the pairing consisting of the sliding surface and the sliding bearing, in comparison with the known straight design configuration.

Usually each prestressing bar is fixed to the slider by fixing screws. For that purpose, provided on the prestressing bars are corresponding bores with a certain oversize in relation to the outside diameter of the screws in order to permit radial displacement of the prestressing bar. Alternatively slots can be provided on the prestressing bars, but these are more expensive to produce.

Adjustment of the radial displacement of the prestressing bar is effected by way of adjusting screws which act on the outer end of each prestressing bar and which can be screwed into screwthreaded bores on the slider. The configuration according to the invention thus permits particularly simple and accurate adjustment, in particular in the assembled condition.

The sliding bearings are made from known plastic materials, for example a modified polyethylene terephthalate or a comparable product.

In order to provide for better heat conduction in respect of the sliding bearing, it can be provided that the cross-sectional area of the sliding bearing is reduced in comparison with making the entire sliding bearing from plastic material by same being fitted on to a metal carrier. In respect of cross-section the metal carrier substantially involves the geometry of a semicylinder with a flattened side and provided on the flattened side is a recess extending in the longitudinal direction, for receiving a sliding bearing of plastic material. In the assembled condition the metal carrier and the sliding bearing form a circular cylinder. The metal carrier with better thermal conductivity than the plastic of the sliding bearing is arranged in the position of installation on the operative surfaces of the wedge member and in turn receives the actual sliding bearing of plastic material, for example in a trough-shaped groove. The metal carrier is preferably made from aluminium. In a worsened design configuration the entire cylindrical sliding bearing can be made from plastic material.

Accordingly the invention also concerns a metal carrier for receiving a sliding bearing for improving the thermal conductivity of the sliding bearing.

The linear sliding bearing according to the invention can be embodied in all standard dimensions, that is to say for all known rail widths and slider dimensions.

The configuration of the slider according to the invention can be embodied both for flange design configurations and also compact design configurations.

The invention is described in greater detail hereinafter by means of preferred embodiments by way of example. In the drawing:
Figure 1 shows a side view of the linear guide according to the invention in the form of a flange design,
Figure 2 shows a plan view of the linear guide shown in Figure 1,
Figure 3 shows an end view of the linear guide of Figure 1,
Figure 4 shows a partly sectional end view of the linear guide of Figure 1,
Figure 5 shows a plan view of a metal carrier according to the invention for the sliding bearings,
Figure 6 shows a plan view of the sliding bearing according to the invention,
Figure 7 shows a side view of a second embodiment of the linear guide according to the invention as a compact design configuration,
Figure 8 shows a plan view of the linear guide shown in Figure 7,
Figure 9 shows an end view of the linear guide shown in Figure 7,
Figure 10 shows a partly sectional end view of the linear guide shown in Figure 7, and
Figure 11 shows a side view, a plan view and an end view of the prestressing bar according to the invention.

Identical or corresponding components are denoted by the same references. Unless otherwise stated, the terms 'inner' and 'outer' respectively relate to the centre line of the shaped rail as a reference axis.

Referring to the drawings, the linear sliding guide according to the invention substantially comprises a shaped rail 1 on which a slider 2 is axially displaceably mounted. The slider 2 embraces the shaped rail 1 preferably in positively locking relationship to prevent radial displacement of the slider in relation to the shaped rail 1.

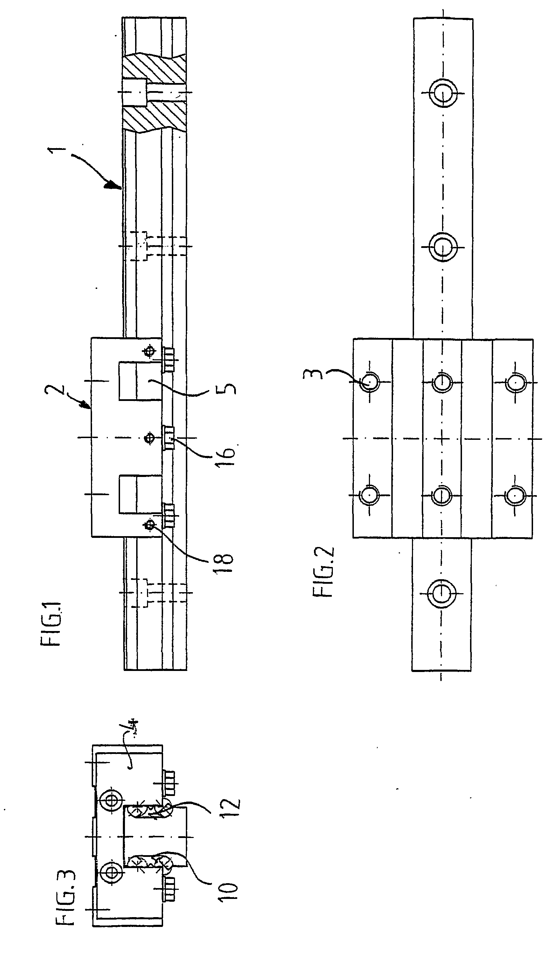

As shown in Figure 2 the slider 2 is provided on its top side with a plurality of screwthreaded bores 3 at which items of equipment, tools or the like can be releasably connected to the slider 2 in known manner.

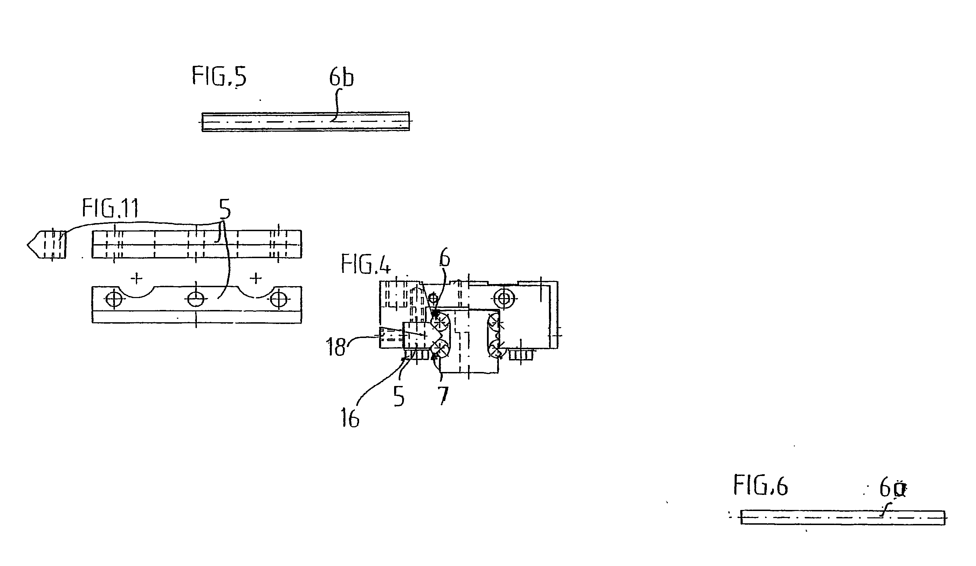

As can be particularly clearly seen from Figures 3 and 4 the shaped rail 1 is provided on both sides with trough-shaped recesses 10, 12 which extend in the longitudinal direction and which extend over a height of approximately two-thirds of the total height of the shape of the rail.

Screwed in known manner on to the respective ends of the slider 2 are cover plates of which the cover plate 4 can be seen in Figure 3.

As can be particularly clearly seen from Figure 4 clamping means in the form of prestressing bars 5 are provided on the slider 2 on both sides. In the present case the prestressing bars 5 are in the form of substantially rectangular metal blocks which are of a wedge-shaped configuration at their inner end. Preferably the wedge is of an isosceles configuration in order to apply equal forces to the sliding bearings which are arranged on the wedge surfaces and which are denoted in their generality by references 6 and 7.

It is however in accordance with the invention that different force fluxes from the clamping bar to the shaped rail 1 can be implemented by the angles of the wedge surfaces being of a differing geometrical configuration.

In the present case each prestressing bar 5 is screwed to the slider 2 by three screws 16. Through holes for the fixing screws are provided in the prestressing bar 5 for that purpose. The through holes in the prestressing bar 5 are larger than the outside diameter of the screw 16 in order to permit radial displacement of the prestressing bar 5 in relation to the slider 2.

In the flange design configuration illustrated in Figures 1 - 4 that radial displacement is effected by means of adjusting screws 18 which are screwed at a spacing from each other in the longitudinal direction into corresponding screwthreaded bores at the longitudinal side of the slider 2 and which act on the outside of the prestressing bar 5. Tightening the adjusting screws 18 causes radial displacement of the prestressing bar 5 in a direction towards the shaped rail 1 and thus produces a higher contact pressure in respect of the sliding bearings 6, 7 and on the correspondingly arranged sliding bearings which are disposed at the opposite side of the shaped rail 1. In the embodiment shown in Figures 1 - 4 the adjusting screws 18 are in the form of grub screws which in the position of installation can be completely sunk in the slider 2 in order to avoid projecting screw heads.

The prestressing bars 5 are adjustable independently of each other in order to permit particularly fine adjustability of the sliding bearings.

As can be seen from Figure 4 the sliding surfaces of the sliding bearings 6, 7 which in the position of installation bear against the sliding surfaces of the recesses 10, 12 in the shaped rail 1 are of a convexly rounded configuration to correspond to the curvature of the shaped rail. By virtue of that configuration according to the invention, markedly larger force-engagement surfaces are provided between the sliding bearings 6, 7 and the sliding surfaces on the shaped rail 1, than when straight sliding surfaces are involved.

Each sliding bearing 6a of plastic material, which is in the shape of a semicylinder, is fitted into a trough-shaped recess of an aluminium carrier 6b which is also of a semicylindrical shape in order to reduce the cross-sectional area of the part of the sliding bearing, which comprises plastic material, and to make use of the higher level of thermal conductivity of the metal.

In the position of installation the aluminium carrier 6b bears in each case at the underside against the wedge surfaces of the prestressing bar 5 and the actual sliding bearing 6a bears at the top side against the friction surface of the shaped rail 1. The bearing unit comprising the carrier 6b and the sliding bearing 6a, depending on the respective radial setting of the prestressing bar, can be optimally oriented according to the requirements involved in such a way that there is always line contact between the bearing element and the prestressing bar 5 and the sliding surfaces without exerting excessive forces on the sliding bearing 6a and thereby upsetting same.

Upon assembly those bearing units are fitted at the ends between the shaped rail 1 and the slider 2 and fixed to the cover plates 4.

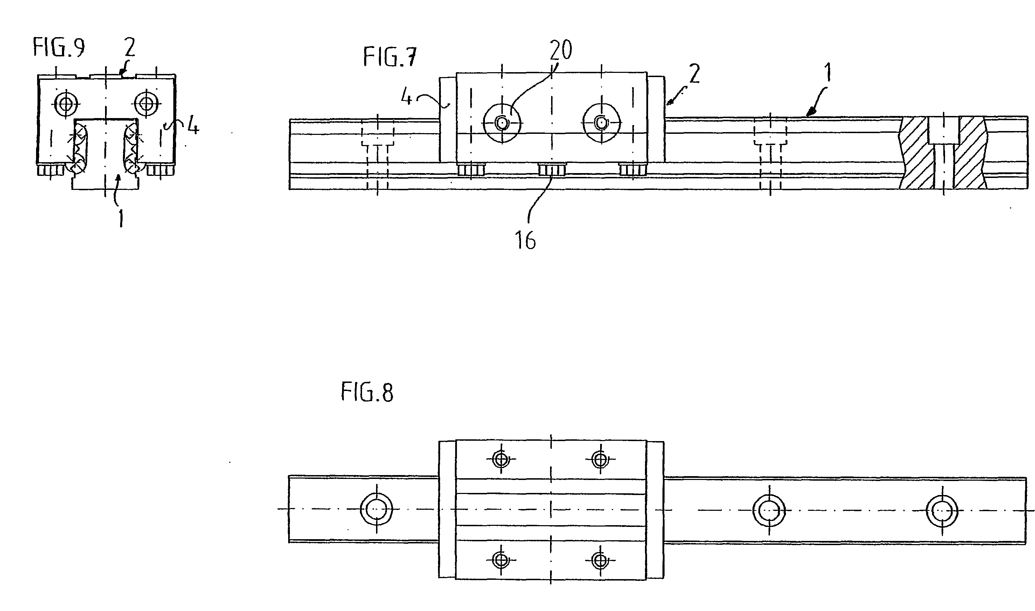

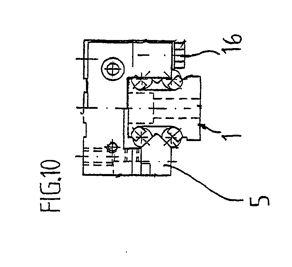

Figures 7 - 10 show a 'compact design configuration' of the sliding bearing according to the invention. This compact design configuration differs from the flange design configuration shown in Figures 1 - 6 by virtue of a smaller width for the slider 2. For that reason, as can be seen in particular from Figure 10, there is no flange material which embraces the prestressing bars 5 on the outside. Instead, the outer end of the prestressing bar terminates flush with the outside surface of the slider 2 in the position of installation.

The prestressing bar 5 in this embodiment is also screwed to the slider 2 by way of fixing screws 16. In contrast to the flange design configuration, the compact design configuration provides that the relative displacement of the prestressing bar 5 in relation to the slider 2 is implemented by way of flat-headed screws 20 which are screwed on the outside into corresponding bores on the carriage or slider and which act on the outer end of the prestressing bar. In the installed condition the heads of the flat-headed screws 20 are in countersinks which are provided in the transitional region between the slider and the prestressing bar in same. Of that countersink the major part is provided in the outside of the slider 2 and a smaller circular segment is provided at the outer side of the prestressing bar 5. The contact pressure of the sliding bearings against the shaped rail 1 can be finely adjusted by tightening and releasing the flat-headed screws 20.

Instead of the trough-shaped recesses 10, 12 shown in the two embodiments the recesses on the shaped rail 1 can also be for example in the form of a wedge-shaped recess so that the profile shape is substantially in the form of an X-shape.

In a simplified embodiment which is worse in terms of adjustment, only one prestressing bar on one side is radially adjustable and the other is fixedly secured to the slider or is formed directly thereon.

The invention thus permits fine adjustment of the contact pressure of the sliding bearings against the shaped rail, wherein the arrangement of the bearings involves an O-arrangement. This has the crucial advantage that torque is better supported on the slider and it avoids upsetting of the sliding bearings, which is known from the state of the art.

It is not absolutely necessary for the operative surface of the prestressing bar to be of a wedge-shaped configuration. Other geometrical configurations are possible as long as the O-arrangement of the bearings in accordance with the invention is embodied. The prestressing force does not have to be applied by screws but can also be afforded by other suitable means, thus for example hydraulic or pneumatic means.

### List of references

- 1: shaped rail
- 2: slider
- 3: screwthreaded bore
- 4: cover plate
- 5: prestressing bar
- 6: sliding bearing
- 7: sliding bearing
- 10: recess
- 12: recess
- 16: screw
- 18: adjusting screw
- 20: flat-headed screw

## Claims

1. A linear sliding guide comprising a shaped rail (1) which extends in the longitudinal direction and which is of a given cross-section with sliding surfaces, and a slider (2) which is axially displaceable on the sliding surfaces of the shaped rail and wherein provided on the slider (2) are sliding bearings (6, 7) which in the position of installation bear against the sliding surfaces and the contact pressure of which against the sliding surfaces is adjustable by way of clamping means, where the shaped rail (1) has mutually oppositely disposed recesses (10, 12) extending in the longitudinal direction and the sliding surfaces are provided within the recesses (10, 12) and provided in corresponding relationship with each recess (10, 12) on the slider (2) is a prestressing bar (5) with a wedge-shaped operative surface which can be pressed into the respective recess (10, 12) and that the sliding bearings (6, 7) are respectively arranged on the operative surfaces **characterised in that**, the sliding surfaces are of an arcuately concavely curved configuration and the surfaces of the sliding bearings (6, 7), which bear against the sliding surfaces, are convexly rounded in complementary relationship with the sliding surfaces.

2. A linear sliding guide according to claim 1 **characterised in that** the prestressing bars (5) are radially displaceable.

3. A linear sliding guide according to claim 2 **characterised in that** the prestressing bars (5) are displaceable independently of each other.

4. A linear sliding guide according to one of claims 1 to 3 **characterised in that** the prestressing bars are adjustable by adjusting screws (18) which can be screwed laterally radially into the slider and which act radially at the outside on the prestressing bars (5).

5. A linear sliding guide according to one of claims 1 to 4 **characterised in that** the sliding bearings (6a) are fitted on to metal carriers (6b) having a cross-section which is substantially of the geometry of a semicylinder with a flattened side and, provided on the flattened side is a recess extending in the longitudinal direction for receiving a sliding bearing (6a).

## Patentansprüche

1. Lineargleitführung bestehend aus einer sich in Längsrichtung erstreckenden und mit einem bestimmten Querschnitt versehenen Profilschiene (1) mit Gleitflächen, einem auf den Gleitflächen der Profilschiene axial verschieblichen Schlitten (2), wobei an dem Schlitten (2) in Einbaulage an die Gleitflächen anliegende Gleitlager (6, 7) vorgesehen sind, deren Anpressdruck gegen die Gleitflächen über Spannmittel einstellbar ist, wobei die Profilschiene (1) sich gegenüberliegende und in Längsrichtung erstreckende Ausnehmungen (10, 12) aufweist, dass die Gleitflächen innerhalb der Ausnehmungen (10, 12) ausgebildet sind, dass korrespondierend zu jeder Ausnehmung (10, 12) an dem Schlitten (2) eine Vorspannleiste (5) mit einer keilförmigen Wirkfläche ausgebildet ist, die jeweils in die Ausnehmung (10, 12) einpressbar ist und dass die Gleitlager (6, 7) jeweils auf den Wirkflächen angeordnet sind, **dadurch gekennzeichnet, dass** die Gleitflächen kreisbogenförmig konkav ausgebildet sind und die an den Gleitflächen anliegende Oberfläche der Gleitlager (6, 7) komplementär zu den Gleitflächen konvex gerundet sind.

2. Lineargleitführung nach Anspruch 1, **dadurch gekennzeichnet, dass** die Vorspannleisten (5) radial verstellbar sind.

3. Lineargleitführung nach Anspruch 2, **dadurch gekennzeichnet, dass** die Vorspannleisten (5) unabhängig voneinander verstellbar sind.

4. Lineargleitführung nach einem der Ansprüche 1 bis 3, **dadurch gekennzeichnet, dass** die Vorspannleisten durch seitlich radial in den Schlitten eindrehbare Einstellschrauben (18) einstellbar sind, welche radial außenseitig auf die Vorspannleisten (5) wirken.

5. Lineargleitführung nach einem der Ansprüche 1 bis 4, **dadurch gekennzeichnet, dass** die Gleitlager (6a) auf Metallträger (6b) aufgesetzt sind, der im Querschnitt im Wesentlichen die Geometrie eines Halbzylinders mit einer abgeflachten Seite aufweist und auf der abgeflachten Seite eine sich in Längsrichtung erstreckende Ausnehmung zur Aufnahme eines Gleitlagers (6a) ausgebildet ist.

## Revendications

1. Guide coulissant linéaire comprenant un rail profilé (1) qui s'étend dans la direction longitudinale et qui a une section transversale donnée avec des surfaces de glissement, et un coulisseau (2) qui peut se déplacer axialement sur les surfaces de glissement du rail profilé et dans lequel se trouvent, sur le coulisseau (2), des paliers coulissants (6, 7) qui, dans la position d'installation, s'appuient contre les surfaces de glissement et dont la pression de contact contre les surfaces de glissement est réglable à l'aide de moyens de serrage, où le rail profilé (1) a des évidements (10, 12) disposés de manière mutuellement opposée s'étendant dans la direction longitudinale et les surfaces de glissement sont prévues à l'intérieur des évidements (10, 12) et, fournie en relation de correspondance avec chaque évidement (10, 12) sur le coulisseau (2), se trouve une barre de précontrainte (5) avec une surface fonctionnelle en forme de coin qui peut être pressée dans l'évidement respectif (10, 12) et en ce que les paliers coulissants (6, 7) sont respectivement agencés sur les surfaces fonctionnelles, **caractérisé en ce que** les surfaces de glissement présentent une configuration incurvée de manière concave formant un arc et les surfaces des paliers coulissants (6, 7), qui s'appuient contre les surfaces de glissement, sont arrondies de manière convexe selon une relation complémentaire avec les surfaces de glissement.

2. Guide coulissant linéaire selon la revendication 1, **caractérisé en ce que** les barres de précontrainte (5) peuvent être déplacées radialement.

3. Guide coulissant linéaire selon la revendication 2, **caractérisé en ce que** les barres de précontrainte (5) peuvent être déplacées indépendamment l'une de l'autre.

4. Guide coulissant linéaire selon l'une des revendications 1 à 3, **caractérisé en ce que** les barres de précontrainte sont réglables en réglant des vis (18) qui peuvent être vissées latéralement et radialement dans le coulisseau et qui agissent radialement à l'extérieur sur les barres de précontrainte (5).

5. Guide coulissant linéaire selon l'une des revendications 1 à 4, **caractérisé en ce que** les paliers coulissants (6a) sont ajustés sur des supports métalliques (6b) ayant une section transversale qui présente sensiblement la géométrie d'un demi-cylindre avec un côté aplati et, sur le côté aplati, se trouve un évidement s'étendant dans la direction longitudinale pour recevoir un palier coulissant (6a).
